# EUROPEAN PATENT APPLICATION

(11) **EP 4 289 276 A1**
(43) Date of publication of application: **13.12.2023**
(21) Application number: 22749538.9
(22) Date of filing: 25.01.2022
(51) Int. Cl.: A21D 13/40, A21D 13/45, A21D 13/48, A21D 13/80, A21D 2/14, A21D 2/18, A21D 2/34, A21D 2/36

(54) **BAKED FOOD**

(30) Priority: 03.02.2021 JP 2021015668
(71) Applicant: House Foods Corporation, Higashi-Osaka-shi, Osaka 577-8520 (JP); House Wellness Foods Corporation, Hyogo 664-0011 (JP)
(72) Inventor: NOHIRA, Tomomi, Higashi-osaka-city, Osaka 577-8520 (JP); SASAKO, Hiroshi, Higashi-osaka-city, Osaka 577-8520 (JP); TOMOTAKE, Muneaki, Itami-shi, Hyogo 664-0011 (JP)
(74) Representative: Hoffmann Eitle
(86) International application number: PCT/JP2022/002556
(87) International publication number: WO 2022/168663

(57) **Abstract**

An object of the present invention is to provide a baked food which has a good flavor and texture while being substantially free of proteins such as milk, eggs and wheat. The present invention provides a dough for baked food comprising: water, a fat and oil, a starch, cyclodextrin and a predetermined water-soluble gelling agent, wherein the dough is substantially free of proteins, as well as a baked food obtained by baking the dough for baked food.

## Description

### Technical Field]

The present invention provides a dough for baked food comprising water, a fat and oil, a starch, cyclodextrin and a predetermined water-soluble gelling agent while being substantially free of proteins, as well as a baked food obtained by baking the dough for baked food.

### Background

Baked foods are foods (such as a cookie, a biscuit, a cracker, cakes, a bread, a frozen dessert cone, a macaroon or wafers) obtained by stirring and mixing raw materials such as milk, eggs and wheat flour to prepare a dough and then baking the dough in an oven or the like, and are popular among men and women of all ages.

Processes for producing baked foods good in flavor and texture have been previously developed and reported. For example, Patent Literature 1 discloses a fat and oil-containing confectionery characterized by comprising whole milk powder, trehalose, modified starch, a vegetable fat and oil, cyclodextrin and lecithin.

Patent Literature 2 discloses a process for producing a sponge cake by simultaneously mixing eggs, sugar, wheat flour and a fat and oil component, allowing them to contain air and then baking them, characterized by using wheat flour and/or starch blended to a protein content of 5% by weight or less as wheat flour and by using, as the fat and oil component, a mixed and kneaded product comprising, as a main ingredient, 30 to 80% by weight of a fat and oil, 15 to 60% by weight of water and 1 to 10% by weight of cyclodextrin.

Patent Literature 3 discloses a process for producing a baked food such as a Monaka (bean-jam-filled wafer) skin, comprising: a step of homogenizing a first raw material containing a fat and oil, an emulsifier, water, skim milk powder or the like with a homogenizer to obtain a homogenized mixture; a step of adding a second raw material containing wheat flour, corn starch, a highly branched cyclic dextrin, a dextrin or the like to the homogenized mixture and mixing them to obtain a water-containing dough; and a step of baking the water-containing dough.

Patent Literature 4 discloses a pancake comprising an oil-in-water type of an emulsified fat-and-oil composition, to be kneaded into a dough, containing a fat and oil, emulsifier, a reduced dextrin, a branched dextrin and cyclodextrin; wheat flour, whole eggs, milk and the like.

Patent Literature 5 discloses a powder mixture for macaroons characterized in having the dried egg white, cyclodextrin and a polysaccharide for thickening blended.

In addition, since general baked foods contain milk, eggs and wheat flour, people who are allergic to these raw materials cannot eat the baked foods. Therefore, processes for producing baked foods free of milk, eggs and wheat as raw materials that can be eaten by people who are allergic to these raw materials have been developed and reported. For example, Patent Literature 6 discloses a process for producing a rice flour bread comprising fermenting a dough obtained by kneading rice flour together with a thickening agent, yeast, a fat and oil, a sugar, a common salt and water without using any allergic substances such as gluten, eggs and dairy products followed by baking the dough, characterized in that hydroxypropyl methylcellulose is used as the thickening agent.

Patent Literature 7 discloses a method for producing cakes containing no wheat, milk or eggs, comprising a step of mixing chocolate, salad oil and low-fat soybean milk to prepare a mixture A; a step of adding rice flour, cocoa powder and baking powder to the mixture A to prepare a mixture B; a step of adding an emulsified fat and oil to the mixture B to allow the mixture B to foam to prepare a dough for cake; and a step of baking the dough for cake.

Patent Literature 8 discloses a dough for soybean protein-containing confectioneries that does not contain wheat, milk or eggs, characterized by containing a soybean protein and a starch-containing material excluding wheat, and a fat and oil.

Patent Literature 9 discloses a full fat soybean flour-containing composition comprising full fat soy flour, a vegetable protein, an emulsifier and a masking agent.

On the other hand, raw materials such as milk, eggs and wheat flour function as emulsifiers in a dough for baked food to impart good physical properties to the dough, which in turn contribute to a good flavor and texture of a product obtained after baking the dough. For this reason, doughs that do not use these raw materials may be poor in emulsion stability and unsatisfied in the flavor, texture and formability of baked foods obtained by baking the dough.

### Citation List

### Patent Literature

Patent Literature 1: Japanese Patent Laid-Open No. 2000-189057
Patent Literature 2:Japanese Patent Laid-Open No. 59-166030
Patent Literature 3: Japanese Patent Laid-Open No. 2004-089028
Patent Literature 4: Japanese Patent Laid-Open No. 2001-095489
Patent Literature 5: Japanese Patent Laid-Open No. 2011-055771
Patent Literature 6: Japanese Patent Laid-Open No. 2008-278827
Patent Literature 7: Japanese Patent Laid-Open No. 2017-176120
Patent Literature 8: Japanese Patent Laid-Open No. 2006-061029
Patent Literature 9: International Publication No. WO2009/113655

### Summary of Invention

### Technical Problem

An object of the present invention is to provide a baked food which has a good flavor, texture and formability while being substantially free of proteins such as milk, eggs and wheat.

### Solution to Problem

The present inventors have made diligent research to solve the above problems and have thereby found that an emulsified composition comprising water, a fat and oil, a starch, cyclodextrin and a predetermined water-soluble gelling agent as a dough can be baked to obtain a baked food which has a good flavor, texture and formability while being substantially free of proteins such as milk, eggs and wheat.

The present invention is based on these new findings and includes the following inventions:
[1] A dough for baked food comprising: water, a fat and oil, a starch, cyclodextrin and at least one water-soluble gelling agent selected from the group consisting of carboxymethylcellulose (CMC), xanthan gum, locust bean gum, guar gum, glucomannan, κ-carrageenan, t-carrageenan, λ-carrageenan, tamarind gum and gellan gum, wherein the dough is substantially free of proteins.
[2] The dough for baked food according to [1], wherein the fat and oil is one or more selected from the group consisting of canola oil, refined rapeseed oil, soybean oil, corn oil, cottonseed oil, peanut oil, sesame oil, rice oil, rice bran oil, camellia oil, safflower oil, olive oil, linseed oil, perilla oil, perilla seed oil, sunflower oil, copra oil, palm oil, coconut oil, tea oil, avocado oil, kukui nut oil, grapeseed oil, cocoa butter, wheat germ oil, almond oil, evening primrose oil, castor oil, hazelnut oil, macadamia nut oil, rosehip oil and grape oil.
[3] The dough for baked food according to [1] or [2], wherein the cyclodextrin is α-cyclodextrin.
[4] The dough for baked food according to any one of [1] to [3], wherein the starch is one or more selected from the group consisting of potato starch, tapioca starch, sweet potato starch, taro starch, rice starch, corn starch, waxy corn starch, high amylose corn starch, mung bean starch, arrowroot starch, dogtooth violet starch, bracken starch, sago starch and lotus root starch and modified starches and dextrin thereof.
[5] A baked food obtained by baking the dough for baked food according to any one of [1] to [4].
[6] The baked food according to [5], which is a frozen dessert cone, a Monaka skin, a wafer, a Kawara senbei, a Nanbu senbei, a cookie, a sable, a biscuit, a cracker, a scone, a gaufre or an edible container.
[7] A process for producing a baked food, comprising baking the dough for baked food according to any one of [1] to [4] .
[8] A kit for producing the dough for baked food according to any one of [1] to [4], comprising a fat and oil, a starch, cyclodextrin and at least one water-soluble gelling agent selected from the group consisting of carboxymethylcellulose (CMC), xanthan gum, locust bean gum, guar gum, glucomannan, κ-carrageenan, t-carrageenan, λ-carrageenan, tamarind gum and gellan gum.

The present specification includes the contents described in the specification and the like of Japanese Patent Application No. 2021-15668 filed on February 3, 2021, to which the present application claims the priority.

All publications, patents and patent applications cited herein will be hereby incorporated by reference in their entirety.

### Advantageous Effects of Invention

The present invention can provide a baked food which has a good flavor, texture and formability while being substantially free of proteins such as milk, eggs and wheat.

### Description of Embodiments

The present invention relates to a dough for baked food comprising water, a fat and oil, a starch, cyclodextrin and a predetermined water-soluble gelling agent while being substantially free of proteins, and a baked food obtained by baking the dough for baked food.

The term "dough for baked food" as used herein means an emulsified composition for producing a baked food. In contrast to general doughs for baked food, the dough for baked food of the present invention does not comprise any proteins derived from milk, eggs, wheat and the like but is prepared by emulsifying a fat and oil to an oil-in-water type. The dough has an excellent emulsion stability and physical properties such as softness and smoothness and can be easily subjected to a baking step. The dough can be baked to obtain a baked food good in flavor, texture and formability.

The term "baked food" as used herein means a food or baked confectionery prepared by baking the dough for baked food in an oven or the like. Examples of the baked food include, but are not limited to, a cookie, a sable, a biscuit, a cracker, a scone, a gaufre, a pound cake, and a sponge cake, a butter cake, a pancake, a bread, a macaroon, a tart (base), a waffle, a wheat flour-based snack confectionery, a frozen dessert cone (such as an ice cream cone, a sugar cone, a waffle cone or a soft-serve ice cream cone), a Monaka skin, a wafer, an edible container, a Kawara senbei, a Nanbu senbei, a senbei, a boro, a Manju and a castella sponge cake. In the present invention, the "baked food" is preferably a frozen dessert cone, a Monaka skin, a wafer, a Kawara senbei, a Nanbu senbei, a cookie, a sable, a biscuit, a cracker, a scone, a gaufre or an edible container. Strictly speaking, the baked food of the present invention is different from the conventionally known baked foods as described above in that it does not comprise proteins derived from milk, eggs, wheat and the like as raw materials. However, the baked food of the present invention has physical properties, shape, texture and/or flavor equivalent or similar to the conventionally known baked foods.

The term "substantially free of proteins" as used herein means that the dough for baked food of the present invention does not comprise any proteins in a manner to exhibit an emulsifying action, and does not necessarily mean that the dough for baked food of the present invention does not comprise any proteins at all. Proteins are generally composed of hydrophobic amino acid residues and hydrophilic amino acid residues, and have an emulsifying action due to their amphipathic property. Therefore, the proteins function as emulsifiers in many emulsified foods (including doughs for baked food). In general doughs for baked food, proteins contained in milk and eggs contained as raw materials serve this function. In contrast, the dough for baked food of the present invention can be comprised of an oil-in-water emulsion comprising water, a fat and oil, a starch, cyclodextrin and a predetermined water-soluble gelling agent and can be substantially free of proteins that function as emulsifiers. The term "substantially free of proteins" as used herein preferably means substantially free of proteins derived from specific raw materials (allergic substances) such as eggs, milk and wheat, or the like. The term "substantially free of proteins" as used herein more preferably means that the dough for baked food of the present invention comprises less than 10 µg/g of protein derived from specific raw materials (allergic substances) such as eggs, milk and wheat, or the like, and still more preferably means that the dough for baked food of the present invention comprises no proteins that are allergic substances such as eggs, milk and wheat (for example, one or more substances selected from 7 specific raw materials and 21 items equivalent to the specific raw materials).

The term "fat and oil" as used herein means animal and vegetable fats and oils (sometimes referred to as edible oils) served for food. Such a fat and oil has a solid fat content (SFC) at 10°C of 0% to 35%, preferably 0% to 30% and more preferably 0% to 25%. The fat and oil preferably has SFC at 20°C of 0% to 25%, preferably 0% to 20% and more preferably 0% to 15%. In addition, the fat and oil preferably has a melting point of 20°C or more, 23°C or more, 25°C or more, 27°C or more, 30°C or more, or 35°C or more. The upper limit of the melting point is not particularly limited, but the melting point can be, for example, 50°C or less, 45°C or less, or 40°C or less. Alternatively, the fat and oil preferably has a solidification point of 12°C or less, 6°C or less, 4°C or less, 0°C or less, -3°C or less, -5°C or less, -7°C or less, -10°C or less, or -15°C or less. The lower limit of the solidification point is not particularly limited, but the solidification point can be, for example, -25°C or more, or -20°C or more.

The fat and oil that can be used in the present invention is preferably an edible vegetable fat and oil. More specific examples of the edible vegetable fat and oil include, but are not limited to, canola oil, refined rapeseed oil, soybean oil, corn oil, cottonseed oil, peanut oil, sesame oil, rice oil, rice bran oil, camellia oil, safflower oil, olive oil, linseed oil, perilla oil, perilla seed oil, sunflower oil, copra oil (such as palm oil or coconut oil), tea oil, avocado oil, kukui nut oil, grapeseed oil, cocoa butter, wheat germ oil, almond oil, evening primrose oil, castor oil, hazelnut oil, macadamia nut oil, rosehip oil and grape oil. The edible animal fat and oil is preferably those that are free of allergic substances (for example, one or more substances selected from 7 specific raw materials and 21 items equivalent to the specific raw materials) or those that have the allergic substances removed therefrom. Any of these fats and oils may be used alone or in combination with different fat(s) and oil(s).

The dough for baked food of the present invention comprises a fat and oil in the amount of 50% by weight or less, such as 45% by weight or less, 40% by weight or less, 35% by weight or less, 30% by weight or less, 25% by weight or less or 20% by weight or less. The lower limit of the content of fat and oil is not particularly limited, but the content of fat and oil can be 5% by weight or more, such as 8% by weight or more, 10% by weight or more, or 15% by weight or more. The range of the content of fat and oil in the dough for baked food of the present invention can be expressed by two numerical values each selected from the numerical values of the above upper and lower limits. For example, the content of fat and oil is in the range of 5% by weight to 50% by weight, 8% by weight to 45% by weight, 10% by weight to 40% by weight, 10% by weight to 35% by weight, 10% by weight to 30% by weight, 15% by weight to 25% by weight, or 15% by weight to 20% by weight, relative to the total amount of the dough. The content of fat and oil in the dough for baked food of the present invention can be appropriately selected from the above contents depending on the particular baked food.

When the content of fat and oil in the dough for baked food of the present invention is adjusted to 50% by weight or less, the dough having an excellent emulsion stability and physical properties such as softness and smoothness can be achieved. In contrast, if the content of fat and oil is more than 50% by weight, the dough may be high in oily feeling such as stickiness, sliminess and viscosity and may not have physical properties desirable for a dough, and the baked food obtained by baking the dough may be impaired in flavor, texture and formability. In addition, if the content of fat and oil is less than 5% by weight, emulsification may not occur sufficiently, and the dough may not have physical properties desirable for a dough, and the baked food obtained by baking the dough may be impaired in flavor, texture and formability.

The dough for baked food of the present invention can comprise water in any amount capable of emulsifying a fat and oil to form an oil-in-water emulsion together with other ingredient(s). For example, the dough for baked food of the present invention can comprise water in amount of 5% by weight or more, such as 10% by weight or more, 15% by weight or more, 20% by weight or more, 25% by weight or more or 30% by weight or more. The upper limit of the amount of water is not particularly limited, but the dough for baked food of the present invention can comprise water in the amount of 50% by weight or less, such as 45% by weight or less, 40% by weight or less, 35% by weight or less, 30% by weight or less, 25% by weight or less or 20% by weight or less. The range of the content of water in the dough for baked food of the present invention can be expressed by two numerical values each selected from the numerical values of the above upper and lower limits. For example, the content of water is in the range of 5% by weight to 50% by weight, 5% by weight to 40% by weight, 5% by weight to 30% by weight, 5% by weight to 20% by weight, 10% by weight to 20% by weight, or 15% by weight to 20% by weight, relative to the total amount of the dough. The content of water in the dough for baked food of the present invention can be appropriately selected from the above contents depending on the particular baked food. When the amount of water in the dough for baked food of the present invention is adjusted within the above range, the dough can have physical properties desirable for a dough. In contrast, if the content of water in the dough for baked food of the present invention is both less than and more than the above range, emulsification of a fat and oil may not occur sufficiently, and the dough may not have physical properties desirable for a dough, and the baked food obtained by baking the dough may be impaired in flavor, texture and formability.

Examples of the "starch" that can be used in the present invention include potato starch, tapioca starch, sweet potato starch, taro starch, rice starch, corn starch, waxy corn starch, high amylose corn starch, mung bean starch, arrowroot starch, dogtooth violet starch, bracken starch, sago starch, lotus root starch and wheat starch and modified starches and dextrin thereof. Wheat starch and the modified starch thereof can be used in the present invention, but wheat starch and the modified starch thereof having allergen proteins such as gluten removed will be used from the viewpoint that they are allergen-free. The "starch" in the present invention is preferably a starch other than wheat starch. Examples of the "modified starch" include an acid-treated starch obtained by treating starch with an acid such as hydrochloric acid or sulfuric acid; a roasted starch obtained by heating and roasting starch; an enzyme-treated starch obtained by treating starch with an enzyme such as amylase, glucoamylase, isoamylase or pullulanase; an oxidized starch obtained by oxidizing starch with an oxidizing agent such as a hypochlorite (for example, an acetylated oxidized starch); an esterified starch obtained by treating starch with acetic anhydride, octenylsuccinic acid, a phosphate or the like (for example, an acetylated starch, a octenylsuccinated starch, a phosphate monoesterified starch, or the like); an etherified starch obtained by adding a functional group to starch via a ether bond (for example, a carboxymethylated starch, a carboxyethylated starch, a hydroxypropylated starch, a hydroxyethylated starch or the like); a crosslinked starch obtained by subjecting starch to intermolecular or intramolecular crosslinking with a functional group such as a phosphoric acid group or an adipic acid group that is introduced into starch (for example, a phosphoric acid crosslinked starch, an adipic acid crosslinked starch, a hydroxypropylated phosphoric acid crosslinked starch, an acetylated phosphoric acid crosslinked starch, an acetylated adipic acid crosslinked starch, or the like). Pregelatinized starches obtained by pregelatinizing these starches can also be used in the present invention. "Dextrin" is a polysaccharide obtained by partially hydrolyzing the above starch with an enzyme, an acids or heat treatment. The dextrin that can be used in the present invention has a dextrose equivalent value (DE value) of 20 or less, such as 18 or less. Any of these starches may be used alone or in combination with different starch(s).

The dough for baked food of the present invention comprises starch in the amount of 5% by weight or more, such as 10% by weight or more, 15% by weight or more, 20% by weight or more, 25% by weight or more, 30% by weight or more, or 35% by weight or more. The upper limit of the content of starch is not particularly limited, but the dough for baked food of the present invention can comprise starch in the amount of 60% by weight or less, such as 55% by weight or less, 50% by weight or less, 45% by weight or less, or 40% by weight or less. The range of the content of starch in the dough for baked food of the present invention can be expressed by two numerical values each selected from the numerical values of the above upper and lower limits. For example, the content of starch is in the range of 5% by weight to 60% by weight, 5% by weight to 50% by weight, 5% by weight to 40% by weight, 5% by weight to 30% by weight, 5% by weight to 25% by weight, or 10% by weight to 25% by weight, relative to the total amount of the dough. The content of starch in the dough for baked food of the present invention can be appropriately selected from the above contents depending on the particular baked food. When the content of starch in the dough for baked food of the present invention is adjusted within the above range, the dough can have physical properties desirable for a dough. In contrast, if the content of starch in the dough for baked food of the present invention is both less than and more than the above range, the dough may not have physical properties desirable for a dough, and the baked food obtained by baking the dough may be impaired in flavor, texture and formability.

"Cyclodextrin" means a non-reducing cyclic maltooligosaccharide having glucose as a constituent unit, and includes α-cyclodextrin with 6 glucose units, β-cyclodextrin with 7 glucose units, and γ-cyclodextrin with 8 glucose units. In the present invention, α-, β- and γ-cyclodextrins and derivatives thereof, and any combination thereof can be used. Examples of the cyclodextrin derivative include, but are limited to, ethylcyclodextrin, methylcyclodextrin, hydroxyethylcyclodextrin, hydroxypropylcyclodextrin, methylaminocyclodextrin, aminocyclodextrin, carboxyethylcyclodextrin, carboxymethylcyclodextrin, sulfoxyethylcyclodextrin, sulfoxycyclodextrin, acetylcyclodextrin, branched cyclodextrin, a cyclodextrin fatty acid ester, glucosylcyclodextrin and maltosylcyclodextrin. Alpha-cyclodextrin is preferably used. Alpha-cyclodextrin is highly soluble in water and it can provide a dough having physical properties such as softness and smoothness.

The dough for baked food of the present invention can comprise cyclodextrin in any amount capable of imparting emulsion stability to the dough for baked food together with a predetermined water-soluble gelling agent described in detail below. For example, the dough for baked food of the present invention can comprise cyclodextrin in the amount of 0.05% by weight or more, such as 0.1% by weight or more, 0.5% by weight or more, 0.7% by weight or more, or 1% by weight or more. The upper limit of the content of cyclodextrin is not particularly limited, but the dough for baked food of the present invention can comprise cyclodextrin in the amount of 3% by weight or less, such as 2.5% by weight or less, 2% by weight or less, 1.5% by weight or less, or 1% by weight or less. The range of the content of cyclodextrin in the dough for baked food of the present invention can be expressed by two numerical values each selected from the numerical values of the above upper and lower limits. For example, the content of cyclodextrin is in the range of 0.05% by weight to 3% by weight, such as 0.1% by weight to 2% by weight, for example, 0.1% by weight to 1% by weight, relative to the total amount of the dough. The content of cyclodextrin in the dough for baked food of the present invention can be appropriately selected from the above contents depending on the particular baked food. When the content of cyclodextrin in the dough for baked food of the present invention is adjusted within the above range, the dough for baked food can have emulsion stability imparted and have physical properties desirable for a dough. In contrast, if the content of cyclodextrin in the dough for baked food of the present invention is less than the above range, the dough for baked food may not have enough emulsion stability, and the baked food obtained by baking the dough may be impaired in flavor, texture and formability. In addition, if the content of cyclodextrin in the dough for baked food of the present invention is more than the above range, the dough for baked food may be too high in viscosity and/or reduced in softness and smoothness and may not have physical properties desirable for a dough, and the baked food obtained by baking the dough may be impaired in flavor, texture and formability.

The term "water-soluble gelling agent" as used herein generally means a substance that is dissolved in water to impart viscosity (sometimes referred to as a thickening agent, a thickening stabilizer, a starch adhesive or the like). Examples of the water-soluble gelling agent that can be used in the present invention include carboxymethylcellulose (CMC), xanthan gum, locust bean gum, guar gum, glucomannan, κ-carrageenan, t-carrageenan, λ-carrageenan, tamarind gum and gellan gum. Any of these water-soluble gelling agents may be used alone or in combination with different water-soluble gelling agent(s).

The dough for baked food of the present invention can comprise a water-soluble gelling agent in any amount capable of imparting emulsion stability to the dough for baked food together with cyclodextrin. For example, the dough for baked food of the present invention can comprise the water-soluble gelling agent in the amount of 0.01% by weight or more, such as 0.05% by weight or more, 0.1% by weight or more, 0.15% by weight or more, 0.2% by weight or more or 0.25% by weight or more. The upper limit of the content of water-soluble gelling agent is not particularly limited, but the dough for baked food of the present invention can comprise the water-soluble gelling agent in the amount of 3% by weight or less, such as 2% by weight or less, 1% by weight or less, 0.8% by weight or less, or 0.5% by weight or less. The range of the content of water-soluble gelling agent in the dough for baked food of the present invention can be expressed by two numerical values each selected from the numerical values of the above upper and lower limits. For example, the content of water-soluble gelling agent is in the range of 0.01% by weight to 3% by weight, for example, 0.05% by weight to 2% by weight, such as 0.1% by weight to 1% by weight, 0.1% by weight to 0.8% by weight, or 0.15% by weight to 0.5% by weight, relative to the total amount of the dough. The content of water-soluble gelling agent in the dough for baked food of the present invention can be appropriately selected from the above contents depending on the particular baked food. When the content of water-soluble gelling agent in the dough for baked food of the present invention is adjusted within the above range, the dough for baked food can have emulsion stability imparted and have physical properties desirable for a dough. In contrast, if the content of water-soluble gelling agent in the dough for baked food of the present invention is less than the above range, the dough for baked food may not have enough emulsion stability, and the baked food obtained by baking the dough may be impaired in flavor, texture and formability. In addition, if the content of water-soluble gelling agent in the dough for baked food of the present invention is more than the above range, the dough for baked food may be too high in viscosity and/or reduced in softness and smoothness and may not have physical properties desirable for a dough, and the baked food obtained by baking the dough may be impaired in flavor, texture and formability.

For the dough for baked food of the present invention, the combined use of the above-described cyclodextrin and water-soluble gelling agent can impart high emulsion stability to the oil-in-water emulsion. Therefore, the dough for baked food of the present invention may be substantially free of emulsifiers generally used in food and drink (especially, doughs for baked food), in addition to the cyclodextrin and the water-soluble gelling agent (but it is not excluded that the dough for baked food of the present invention comprises an emulsifier). Preferably, the dough for baked food of the present invention is substantially free of emulsifiers. Examples of such an emulsifier include a glycerin fatty acid ester, an organic acid monoglyceride, a polyglycerin fatty acid ester, a propylene glycol fatty acid ester, a polyglycerin condensed ricinoleic acid ester, a sorbitan fatty acid ester, a sucrose fatty acid ester, a lecithin (such as soybean lecithin, rapeseed lecithin, sunflower lecithin, cottonseed lecithin, corn lecithin, peanut lecithin, palm lecithin, sesame lecithin, rice lecithin, perilla lecithin, linseed lecithin and egg yolk lecithin, and an enzymatically degraded lecithins and hydrogenated lecithins derived therefrom). The term "substantially free of emulsifiers" as used herein means that the dough for baked food of the present invention does not comprise any emulsifiers in a manner to exhibit an emulsifying action, and does not mean that the dough for baked food of the present invention comprises no emulsifiers at all. When the dough for baked food of the present invention is substantially free of emulsifiers, it can have more high emulsion stability and thereby have physical properties desirable for a dough, and can be baked to provide a baked food good in flavor, texture and formability.

In addition to the above ingredients, the dough for baked food of the present invention may optionally further have other ingredient(s), commonly used for producing food and drink, blended therein, such as a preservative, an antiseptic agent, an antioxidant, a coloring agent, a solvent, a solubilizing agent, a tonicity agent, a flavoring agent, a pH adjuster, a flavoring, a inorganic salt, saccharide/sweetener (such as glucose, fructose, maltose, trehalose, arabinose, xylose, galactose, sugar, lactose, maltose or brown sugar), a taste component, an acidulant, vitamins, yeast or leavening agent. The blending amount of these other ingredients can be appropriately selected as long as they do not interfere with the physical properties of the dough for baked food desired in the present invention.

The dough for baked food of the present invention can be produced by mixing and stirring water, a fat and oil, a starch, cyclodextrin and a predetermined water-soluble gelling agent, and optionally other ingredient(s), each being used in the above-described blending amounts. All of the ingredients may be mixed and stirred together, or each of the ingredients may be added separately or sequentially (in any order) and mixed and stirred. The resulting dough for baked food can be provided after being filled and sealed in a suitable container and subjected to heat sterilization or the like.

The dough for baked food of the present invention can also be provided in the form of a kit for producing the dough for baked food. The kit for producing the dough for baked food comprises a fat and oil, a starch, cyclodextrin and a predetermined water-soluble gelling agent, and other ingredient(s) and optionally further water in the above predetermined blending amount or blending proportion, which can be contained individually in separate containers or in any combination in separate containers.

The fat and oil, starch, cyclodextrin and water-soluble gelling agent and other ingredient(s) comprised in the kit may be in the form of a solid such as a powder or a granule (each of them may optionally contain an excipient (such as dextrin)), or may be in the form of liquid such as an aqueous solution or dispersion. Each of the ingredients can be subjected to heat sterilization or the like before or after it is contained in a container depending on its form to provide a component of the kit.

The kit can be used according to the above-described process for producing a dough for baked food of the present invention. The dough for baked food can be obtained using the kit by placing, in a container such as a bowl, a predetermined amount of water (when any ingredient in the kit is in the form of liquid, the water may be water contained in the ingredient), a fat and oil, a starch, cyclodextrin and a water-soluble gelling agent, and other ingredient(s) and then mixing and stirring them with a mixer, a blender or the like.

The dough for baked food of the present invention has an excellent emulsion stability such that water and a fat and oil are not easily separated and they are preferably not separated. In addition, the dough for baked food of the present invention has physical properties such as softness and smoothness, and thereby has an excellent handleability (ease of handling) in a step of producing a dough and in a step of producing baked food. Furthermore, little or no oil separation occurs in the dough for baked food of the present invention, and the dough can be baked to produce a baked food good in flavor, texture and formability.

The dough for baked food of the present invention can be placed in a predetermined mold or spread on a plate and then baked in an oven at 160°C to 250°C such as 180°C to 190°C, for 1 to 60 minutes such as 2 to 3 minutes, depending on the desired particular process for producing a baked food, to produce a baked food. The resulting baked food can be subjected to a forming step. In one aspect, for example, the resulting baked food can be formed into a desired shape (such as a cup shape or plate shape) by pressing the baked food against a mold and solidifying it while cooling.

Hereinafter, the present invention will be described in detail with reference to examples thereof, but the present invention will not be limited to the examples.

### [Examples]

### 1. Experimental method

### (1) Preparation of baked food (frozen dessert cone)

The baked food (frozen dessert cone) of each of Examples 1 to 12 and Comparative Examples 1 to 7 was prepared with the representative composition shown in Tables 1-1 and 1-2 below, in accordance with a conventionally known process for producing a frozen dessert cone. Palm oil was used as a fat and oil. The ingredients were mixed by stirring them with a homogenizer at 2,000 rpm for 3 minutes so that the mixture is in an emulsified state. A 20 g portion of the resulting dough was spread thinly in a circular shape on a plate of a press-type waffle cone maker, baked at 180°C for 2 minutes while pressing it from above, and formed into a cone shape with a conical mold to prepare a baked food having a thickness of about 2 to 3 mm. The amount of each ingredient in the table is shown in grams.

### (2) Evaluation of baked food

The dough prepared as described above and the baked product obtained after baking the dough were evaluated on the following scale of 5 to 1, regarding "oil separation in dough", "oil separation after baking", "holes and formability after baking", "crispy texture of baked product":
5: Good,
4: Slightly good,
3: Acceptable,
2: Slightly poor, and
1: Poor.

The weight after baking is shown as an average value (n=2). "Formability" means the property of forming the intended shape of the baked food. That is, "good" formability means that the baked food has the intended shape, and "poor" formability means that the baked food does not have the intended shape (for example, it has holes, cracks, crumbles, distorted shapes, or the like).

### 2. Results

The evaluation results of each baked food are shown in Tables 1-1 and 1-2 below.

In each of Examples 1 and 2 containing a fat and oil, water, xanthan gum, α-cyclodextrin, potato starch and corn starch, good results were obtained in both the dough and the baked product obtained after baking the dough. In addition, in both Examples, when the flatly baked product was wrapped around a conical mold while it was still hot after baking, it was possible to form the cone into a general shape for frozen dessert cones.

In Example 3, in which the amount of a fat and oil was increased, some oil separation was observed after baking, but a good dough and baked product were obtained.

In each of Examples 4 to 12, which contain, instead of xanthan gum as a water-soluble gelling agent, CMC, guar gum, glucomannan, locust bean gum, tamarind gum, gellan gum, κ-carrageenan, t-carrageenan and λ-carrageenan, respectively, good results were also obtained for both the dough and the baked product obtained after baking the dough.

In contrast, in Comparative Example 1 not containing xanthan gum and α-cyclodextrin, water and a fat and oil were separated from each other, so that the dough neither could be prepared nor baked. In Comparative Example 2 not containing xanthan gum, water and a fat and oil were separated from each other, so that the dough could not be prepared and good results could not be obtained for the baked product. In Comparative Example 3 not containing α-cyclodextrin, the prepared dough had separation of water and a fat and oil therein observed in a short period of time due to its poor stability, and it also had oil separation observed after baked.

In each of Comparative Examples 4 and 5, in which emulsifiers (a monoglyceride (Sunsoft No. 8070V) and a glycerin fatty acid ester (RYOTO Polyglyester SWA-10D), respectively) were further added, the dough was hard and difficult to spread thinly in a circular shape, and separation of water and a fat and oil was observed. Oil separation was observed after baking. These results are believed to be due to the fact that the emulsifier inhibits Pickering emulsification by α-cyclodextrin.

In each of Comparative Examples 6 and 7 containing gum arabic and pectin, respectively, instead of xanthan gum, oil separation was observed in the dough and the baked product obtained after baking, and good results were not obtained for the baked product.

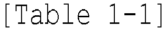

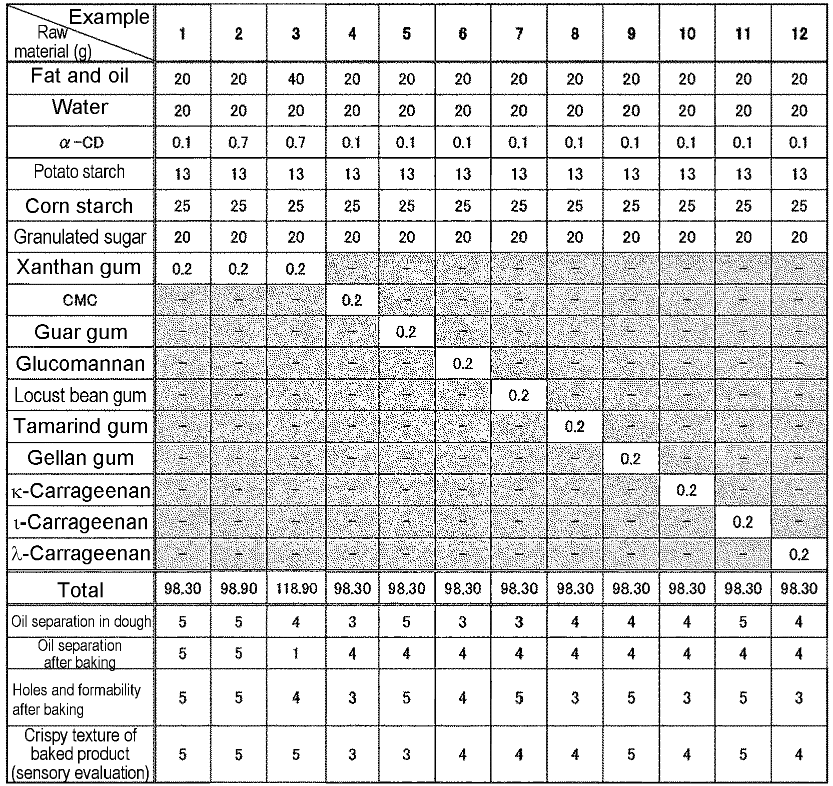

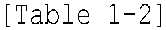

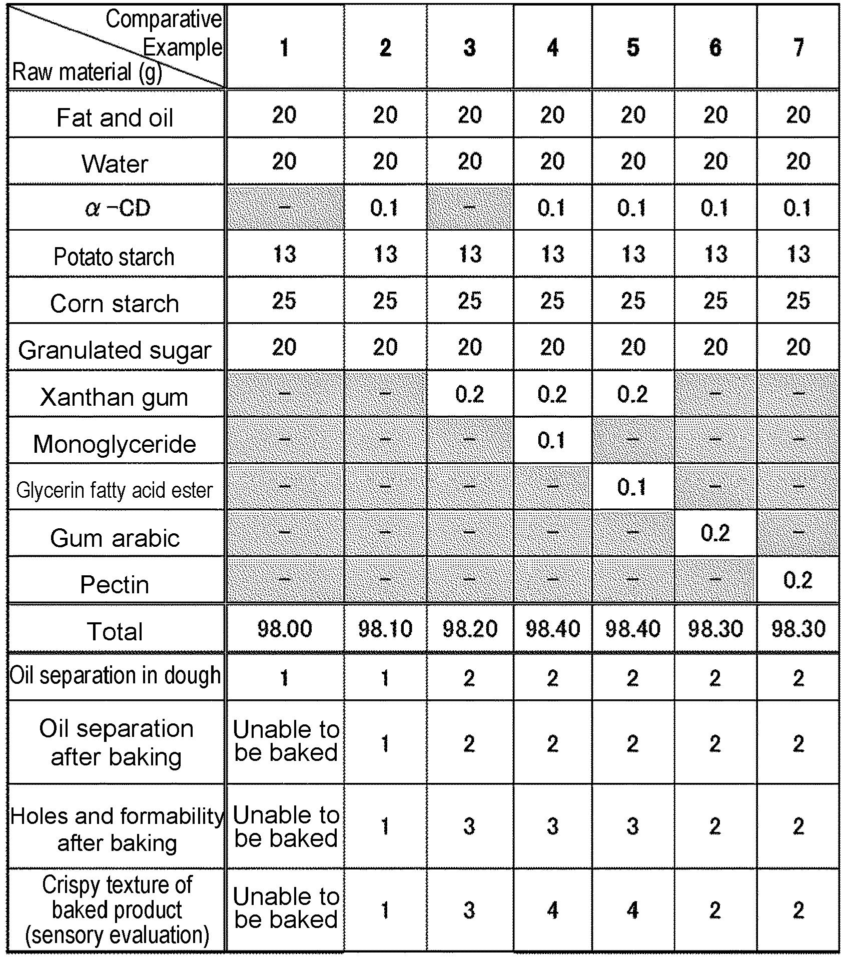

From the above results, it has been confirmed that water, a fat and oil, a starch, cyclodextrin and a water-soluble gelling agent such as xanthan gum can be combined to prepare a dough for baked food having an excellent emulsion stability and physical properties such as softness and smoothness while being substantially free of proteins, such as milk and eggs, and emulsifiers, so that the dough can be baked to obtain a baked food good in flavor, texture and formability.

### 3. Preparation of baked food (cookie)

The baked food (cookie) of Examples 13 was prepared with the representative composition shown in Tables 2 below, in accordance with a conventionally known process for producing a cookie. Palm oil was used as a fat and oil. A combination of a fat and oil and granulated sugar, and a combination of water, α-cyclodextrin and xanthan gum were stirred and mixed using a homogenizer, respectively to provide two mixtures, and the two mixtures were then combined, mixed and emulsified. Potato starch and corn starch were added to the resulting mixture and mixed to provide a dough, and the dough was formed into a rod shape having a diameter of about 1.5 cm and cooled in a refrigerator for 30 minutes. Next, the dough cut into a thickness of about 8 mm was arranged on an oven baking sheet, placed in a preheated oven and baked at 170°C for 15 minutes to prepare a baked food (cookie).

In Example 13, good results were obtained in both the dough and the baked product obtained after baking the dough. The dough had an excellent emulsion stability, did not have oil separation observed and had a good shape retention as a dough for cookie. In addition, the baked product obtained after baking the dough did not have oil separation observed, and had a good flavor, texture and formability as a cookie.

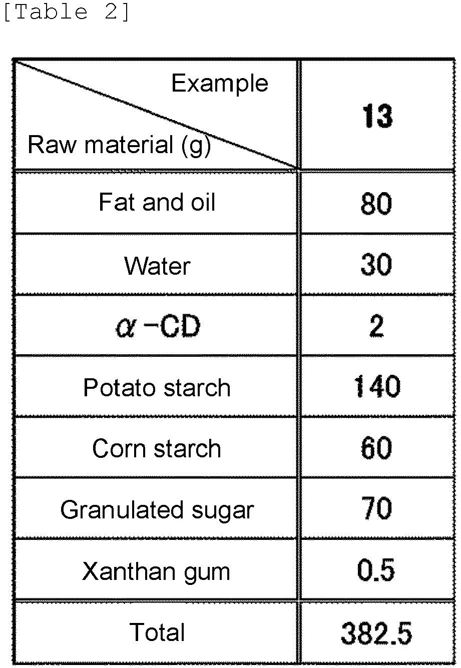

## Claims

1. A dough for baked food comprising: water, a fat and oil, a starch, cyclodextrin and at least one water-soluble gelling agent selected from the group consisting of carboxymethylcellulose (CMC), xanthan gum, locust bean gum, guar gum, glucomannan, κ-carrageenan, t-carrageenan, λ-carrageenan, tamarind gum and gellan gum, wherein the dough is substantially free of proteins.

2. The dough for baked food according to claim 1, wherein the fat and oil is one or more selected from the group consisting of canola oil, refined rapeseed oil, soybean oil, corn oil, cottonseed oil, peanut oil, sesame oil, rice oil, rice bran oil, camellia oil, safflower oil, olive oil, linseed oil, perilla oil, perilla seed oil, sunflower oil, copra oil, palm oil, coconut oil, tea oil, avocado oil, kukui nut oil, grapeseed oil, cocoa butter, wheat germ oil, almond oil, evening primrose oil, castor oil, hazelnut oil, macadamia nut oil, rosehip oil and grape oil.

3. The dough for baked food according to claim 1 or 2, wherein the cyclodextrin is α-cyclodextrin.

4. The dough for baked food according to any one of claims 1 to 3, wherein the starch is one or more selected from the group consisting of potato starch, tapioca starch, sweet potato starch, taro starch, rice starch, corn starch, waxy corn starch, high amylose corn starch, mung bean starch, arrowroot starch, dogtooth violet starch, bracken starch, sago starch and lotus root starch and modified starches and dextrin thereof.

5. A baked food obtained by baking the dough for baked food according to any one of claims 1 to 4.

6. The baked food according to claim 5, which is a frozen dessert cone, a Monaka skin, a wafer, a Kawara senbei, a Nanbu senbei, a cookie, a sable, a biscuit, a cracker, a scone, a gaufre or an edible container.

7. A process for producing a baked food, comprising baking the dough for baked food according to any one of claims 1 to 4.

8. A kit for producing the dough for baked food according to any one of claims 1 to 4, comprising: a fat and oil, a starch, cyclodextrin and at least one water-soluble gelling agent selected from the group consisting of carboxymethylcellulose (CMC), xanthan gum, locust bean gum, guar gum, glucomannan, κ-carrageenan, t-carrageenan, λ-carrageenan, tamarind gum and gellan gum.
